# EUROPÄISCHE PATENTANMELDUNG

(11) **EP 2 030 831 A2**
(43) Veröffentlichungstag der Anmeldung: **04.03.2009**
(21) Anmeldenummer: 08017931.0
(22) Anmeldetag: 14.02.2007
(51) Int. Cl.: B60N 2/01, B62D 31/02, F41H 7/02, B60R 3/02

(54) **Militärisches Kraftfahrzeug zur Personenbeförderung**

(30) Priorität: 14.03.2006 DE 102006011611
(62) Teilanmeldung aus: 07711180.5
(71) Anmelder: Krauss-Maffei Wegmann GmbH & Co. KG, 80997 München (DE)
(72) Erfinder: Schuhmann, Manfred, 85276 Pfaffenhofen (DE); Stoiber, Wolfgang, 84036 Landshut (DE); Mutver, Melih, 80939 München (DE)
(74) Vertreter: Feder Walter Ebert

(57) **Zusammenfassung**

Ein militärisches Kraftfahrzeug zur Personenbeförderung mit einem Fahrzeugchassis, auf dem ein Mannschaftsgehäuse angeordnet ist. Als Mannschaftsgehäuse dient ein lösbar auf dem Fahrzeugchassis angeordneter Norm-Container (1), der mit Verstärkungsstrukturen und einer zusätzlichen Panzerung versehen ist. An der Rückseite ist eine Ein-/Ausstiegsöffnung und an einer Seitenwand eine Notausstiegsöffnung vorgesehen, die jeweils mit Türen verschließbar sind. An der Rückseite (1.1) des Containers (1) ist neben der Ein-/Ausstiegsöffnung eine Leiter (7) angeordnet, die aus einer Ruhestellung in eine Arbeitsstellung absenkbar ist.

Mit der Innenseite des Türflügels (4.1) ist im Bereich der Unterkante eine um eine horizontale Achse nach außen schwenkbar an der Ausstiegskante des Containerbodens angeordnete Plattform (17) verbunden. Die Plattform (17) steht bei geschlossenem Türflügel (4.1) in einer vertikalen Ruhestellung und wird beim Öffnen in eine horizontale Arbeitsstellung herabgeschwenkt.

## Beschreibung

Die Erfindung betrifft ein militärisches Kraftfahrzeug zur Personenbeförderung mit den Merkmalen aus dem Oberbegriff des Patentanspruchs 1.

Ein derartiges Kraftfahrzeug ist bekannt und beispielsweise in DE 103 45 914 A1 beschrieben.

Gemäß diesem Stand der Technik ist es bekannt, bei einem militärischen Kraftfahrzeug zur Personenbeförderung beim Aufbau des Mannschaftsgehäuses von einem Container mit den üblichen genormten Abmessungen auszugehen, was den großen Vorteil mit sich bringt, dass ein solcher Container auf ein normales Container-Fahrzeug aufgesetzt werden kann, mit dem auch Fracht-Container transportiert werden können. Es ist jedoch notwendig, einen derartigen Container nicht nur mit einem ausreichenden Schutz gegen Minen und andere Explosionskörper zu versehen, sondern ihn auch so auszustatten, dass er zum Mannschaftstransport geeignet ist. Dies betrifft auch die Möglichkeiten eines raschen Ein- und Aussteigens, insbesondere im Notfall.

Der Erfindung liegt die Aufgabe zugrunde, ein militärisches Kraftfahrzeug zur Personenbeförderung mit den im Oberbegriff des Patentanspruchs 1 aufgeführten Merkmalen so weiterzubilden, dass die oben angegebenen Bedingungen in optimaler Weise erfüllt werden.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Normaleinstieg in das Mannschaftsgehäuse befindet sich an der Rückseite. Dort ist eine Schwenktür angeordnet, an deren Unterkante eine beim Öffnen nach außen sich ausfaltende Plattform befestigt ist, die sich beim Schließen an der Innenseite der Tür entlang nach oben schwenkt. Neben dieser Tür ist an der Rückwand des Containers eine Leiter angeordnet, die herausgeschwenkt und abwärtsbewegt werden kann und über die ein- und ausgestiegen wird. Dies ist notwendig, da sich die Unterkante des Containers ca. 1,80 m über dem Erdboden befindet.

An einer Seitenwand des Containers befindet sich noch eine Notausstiegstür, die nach außen aufgeschwenkt und durch eine Feststellbremse festgehalten werden kann. An der Tür ist eine Klappleiter oder Strickleiter zum Verlassen des Containers angeordnet.

Im Folgenden wird anhand der beigefügten Zeichnungen ein Ausführungsbeispiel für ein militärisches Kraftfahrzeug nach der Erfindung näher erläutert.

### In den Zeichnungen zeigen:

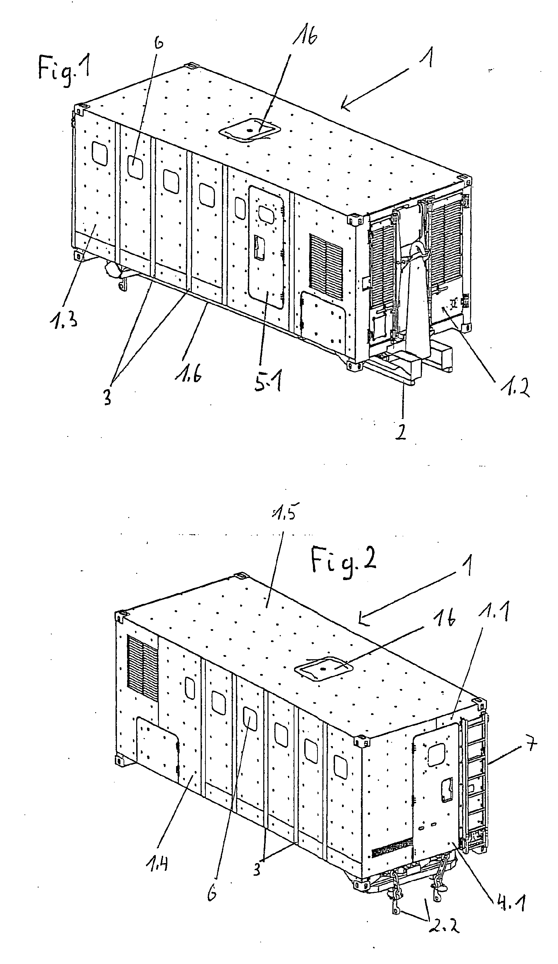

- Fig. 1: einen auf ein Fahrzeug aufsetzbaren Container in einer perspektivischen Ansicht von schräg vorne;
- Fig. 2: den Container nach Fig. 1 in einer perspektivischen Ansicht von schräg hinten;
- Fig. 3: eine perspektivische Ansicht der Rückseite des Containers nach Fig. 1 und 2 bei leicht geöffneter Hecktür;
- Fig. 4: in einer Darstellung analog Fig. 3 die Rückseite des Containers bei weiter geöffneter Hecktür;
- Fig. 5: in einer Darstellung analog Fig. 3 und 4 die Rückseite des Containers bei voll geöffneter Hecktür;

- Fig. 6: in perspektivischer Darstellung einen Ausschnitt aus der Seitenwand des Containers nach Fig. 1 und 2 bei geöffneter Notausstiegstür;
- Fig. 7: in einer Darstellung analog Fig. 6 den Ausschnitt bei geöffneter Hecktür und abgeklappter Notausstiegsleiter.

Der in den Zeichnungen dargestellte, zu einem Mannschaftsgehäuse umgebaute Norm-Container 1 besitzt eine Rückwand 1.1, eine Vorderwand 1.2, eine in Fahrtrichtung gesehen rechte Seitenwand 1.3, eine linke Seitenwand 1.4 sowie eine Dachplatte 1.5 und eine Bodenplatte 1.6.

Der Container 1 ist auf einen Verbindungsrahmen 2 aufgesetzt, mit dem zusammen er von einem nicht dargestellten Trägerfahrzeug aufgenommen werden kann. Am hinteren Ende des Containers sind Verzurrelemente 2.2 angeordnet zur Festlegung der Rückseite des Containers 1 auf dem Trägerfahrzeug.

In der Dachplatte 1.6 des Containers 1 ist eine Notausstiegsöffnung 16 vorgesehen, die mittels eines auswerfbaren Deckels verschließbar ist.

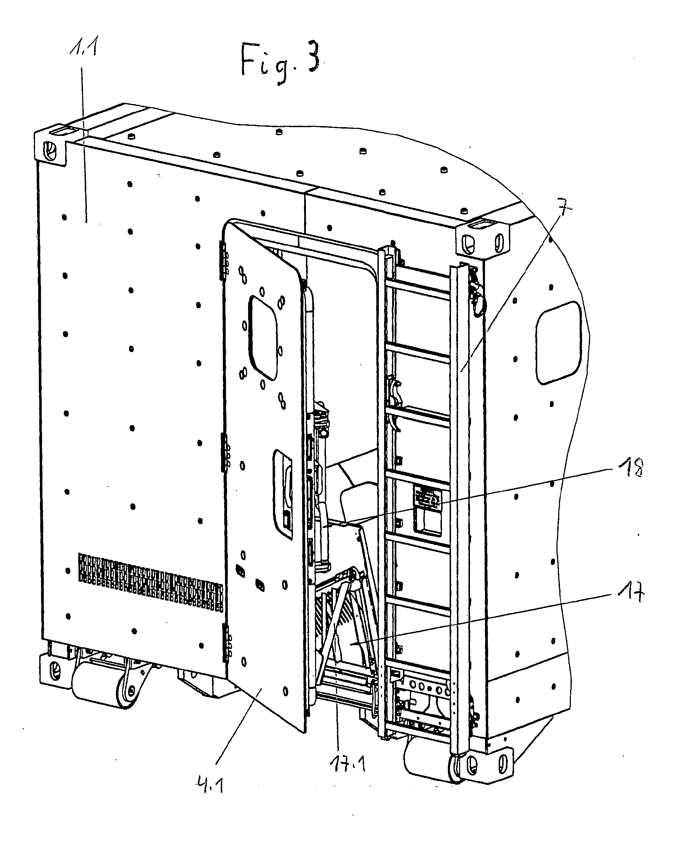

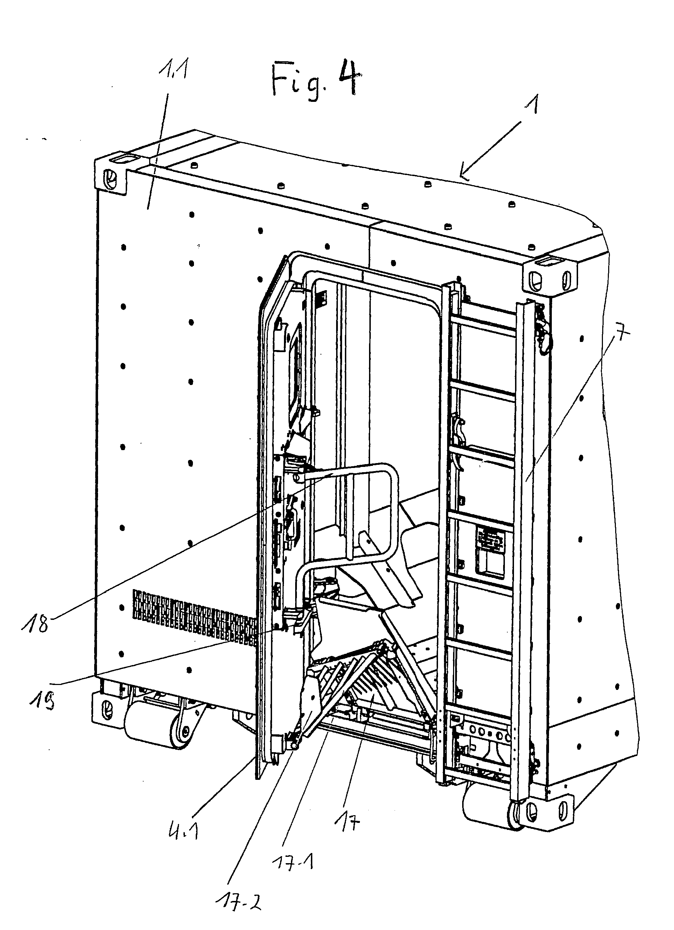

Im Folgenden werden anhand der Fig. 3 bis 7 die Ein-/Ausstiegsbereiche des Containers näher erläutert.

In der Rückwand 1.1 des Containers 1 ist eine Ein-/Ausstiegsöffnung 4 vorgesehen, die mittels einer Tür 4.1 verschließbar ist. Im äußeren Wandbereich neben der Tür 4.1 ist an der Rückseite des Containers eine Leiter 7 angeordnet, die in den Fig. 3 bis 5 in einer angehobenen Ruhestellung dargestellt ist. Es handelt sich um eine Schiebeleiter, die nach Abschwenken von der Rückwand 1.1 aus der dargestellten Ruhestellung nach unten in eine Arbeitsstellung verschiebbar ist, in der ihr unteres Ende auf oder unmittelbar über der Aufstandsebene des Fahrzeugs liegt. Dies ist von besonderer Bedeutung, da die Unterkante des Containers bei auf das Fahrzeug aufgesetztem Container ca. 1,80 m über dem Boden liegt.

Zur weiteren Erleichterung des Ein- und Aussteigens ist an den um eine vertikale Schwenkachse nach außen schwenkbaren Türflügel 4.1 an dessen Innenseite im Bereich der Unterkante eine um eine horizontale Achse nach außen schwenkbar an der Ausstiegskante des Containerbodens 1.6 angeordnete Plattform 17 über gelenkige Verbindungselemente 17.1 angekoppelt. Wie aus den Fig. 3 bis 5 ersichtlich, ist die Anordnung dabei derart, dass diese Plattform 17 bei geschlossenem Türflügel 4.1 in einer im Wesentlichen vertikalen Ruhestellung steht und beim Öffnen des Türflügels automatisch in eine horizontale Arbeitsstellung herabgeschwenkt wird. Dabei legt sie sich in der ganz herabgeschwenkten Stellung an eine an der Innenseite des Türflügels 4.1 angeordnete und um eine horizontale Achse schwenkbare Teilplattform 17.2 an, die über gelenkige Verbindungselemente 17.1 mit der Plattform 17 verbunden ist, so dass im voll geöffneten Zustand der Türflügel 4.1 eine aus der Plattform 17 und der Teilplattform 17.1 entstehende Gesamtplattform entsteht, die von den ein-/aussteigenden Personen betreten werden kann.

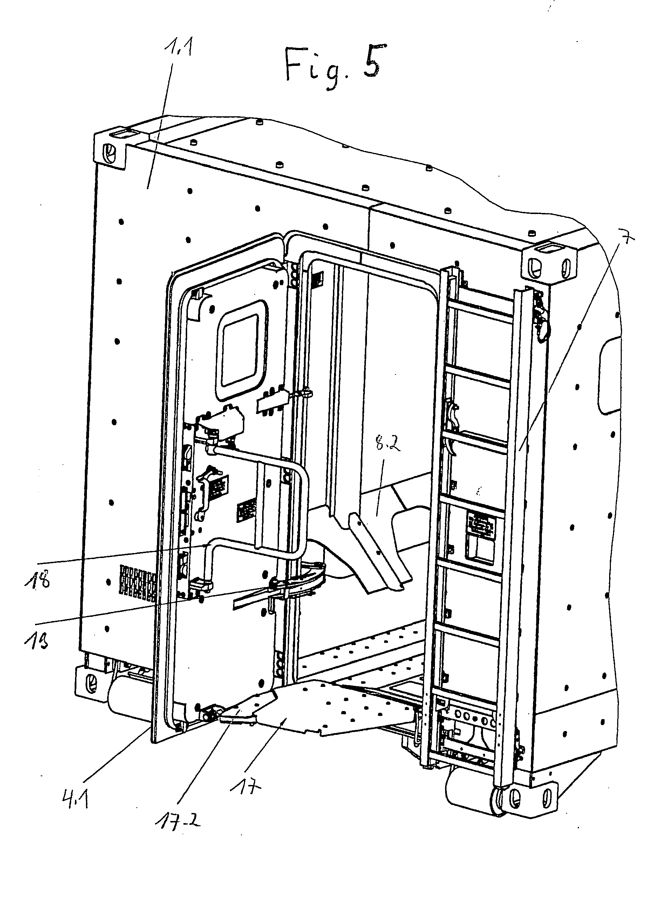

Zur weiteren Erhöhung der Sicherheit ist an der Innenseite des Türflügels 4.1 im Bereich der herausschwenkbaren, vertikalen Schließkante ein Sicherheitsgeländer 18 ausschwenkbar angeordnet derart, dass beim Öffnen des Türflügels 4.1 aus einer Ruhelage, in der es im Wesentlichen parallel zum Türflügel steht, automatisch in eine Arbeitslage geführt wird, in der es im Wesentlichen rechtwinklig zum Türflügel steht, so dass, wie aus Fig. 5 zu ersehen, das Herausfallen einer Person aus der Türöffnung 4 verhindert wird. Die Bewegung des Türflügels 4.1 wird durch einen nicht näher erläuterten Türantrieb 19 gesteuert, von dem aus auch die Bewegung des Sicherheitsgeländers gesteuert wird.

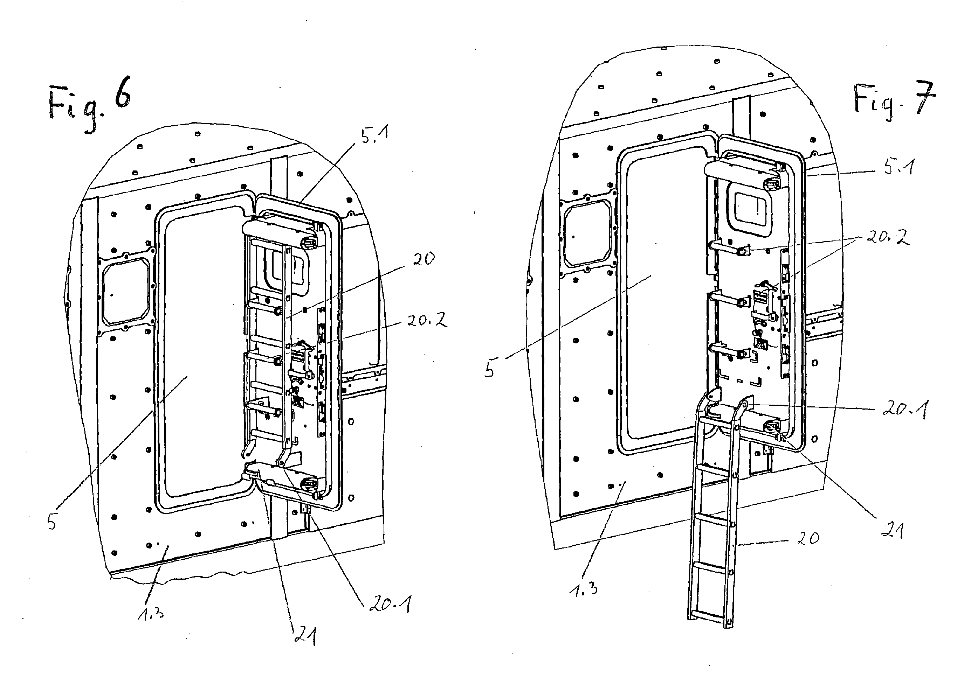

Die Fig. 6 und 7 zeigen Einzelheiten der die Notausstiegsöffnung 5 in der rechten Seitenwand 1.3 verschließenden Tür mit einem um eine vertikale Achse nach außen schwenkbaren Türflügel 5.1. An der Innenseite des Türflügels 5.1 ist eine Leiter 20 angeordnet, die aus einer in Fig. 6 dargestellten Ruheposition um eine Schwenkachse 20.1 in die in Fig. 7 dargestellte Arbeitsposition verschwenkbar ist, in der sie am Türflügel 5.1 hängend nach unten gerichtet ist und das Aussteigen aus der Notausstiegsöffnung 5 ermöglicht. Weiterhin sind an der Innenseite des Türflügels 5.1 das Aussteigen erleichternde Handgriffe 20.2 angeordnet. Die Offenstellung des Türflügels 5.1 ist durch eine lösbare Feststellbremse 21 sicherbar.

Die Verriegelungseinrichtungen für die Türflügel 4.1 und 5.1 sind grundsätzlich von außen und innen betätigbar. Die Türen können weiterhin mit Einrichtungen, beispielsweise Verriegelungshaken, versehen sein, mit denen erreicht werden kann, dass sie von außen nicht geöffnet werden können.

## Patentansprüche

1. Militärisches Kraftfahrzeug zur Personenbeförderung mit einem auf einem Räderfahrwerk angeordneten Fahrzeugchassis, das am vorderen Ende ein Fahrerhaus trägt und bei dem hinter dem Fahrerhaus ein geschlossenes Mannschaftsgehäuse angeordnet ist, das zur Aufnahme einer vorgegebenen Anzahl von Personen ausgelegt ist, wobei als Mannschaftsgehäuse ein auf dem Fahrzeugchassis lösbar befestigter Norm-Container dient, der mit Versteifungsstrukturen und mindestens an den Außenwänden mit einer zusätzlichen Panzerung versehen ist und der an seiner Rückseite eine Ein-/Ausstiegsöffnung aufweist, die mittels einer Tür verschließbar ist, **dadurch gekennzeichnet, dass** die Ein-/Ausstiegsöffnung (4) mittels mindestens eines um eine vertikale Schwenkachse nach außen schwenkbaren Türflügels (4.1) verschließbar ist, mit dessen Innenseite im Bereich der Unterkante eine um eine horizontale Achse nach außen schwenkbar an der Ausstiegskante des Containerbodens (1.6) angeordnete Plattform (17) über gelenkige Verbindungselemente (17.1) verbunden ist, wobei die Anordnung derart ist, dass die Plattform (17) bei geschlossenem Türflügel (4.1) in einer im wesentlichen vertikalen Ruhestellung steht und beim Öffnen automatisch in eine horizontale Arbeitsstellung herabgeschwenkt wird.

2. Kraftfahrzeug nach Anspruch 1, **dadurch gekennzeichnet, dass** an der Innenseite des Türflügels (4.1) im Bereich der herausschwenkbaren vertikalen Schließkante ein Sicherheitsgeländer (18) ausschwenkbar angeordnet ist derart, dass es beim Öffnen des Türflügels (4.1) aus einer Ruhelage, in der es im Wesentlichen parallel zum Türflügel steht, automatisch in eine Arbeitslage geführt wird, in der es im Wesentlichen rechtwinklig zum Türflügel steht.

3. Kraftfahrzeug nach Anspruch 1 oder 2, **dadurch gekennzeichnet,**
**dass** die Plattform (17) aus zwei Teilen aufgebaut ist, von denen einer schwenkbar an der Ausstiegskante des Containerbodens (1.6) und der andere (17.2) schwenkbar an der Innenseite des Türflügels (4.1) angeordnet ist und die beiden Teile über gelenkige Verbindungselemente (17.1) miteinander gekoppelt sind.

4. Kraftfahrzeug nach einem der Ansprüche 1 bis 3, **dadurch gekennzeichnet, dass** an einer Seitenwand des Containers (1) eine mittels eines schwenkbaren Türflügels (5.1) verschließbare Notausstiegsöffnung (5) angeordnet ist, wobei an der Innenseite des Türflügels (5.1) eine ausklappbare Leiter (20) angeordnet ist und der Türflügel (5.1) durch eine lösbare Feststellbremse (21) arretierbar ist.
